# EUROPÄISCHE PATENTSCHRIFT

(11) **EP 1 818 230 B1**
(45) Veröffentlichungstag und Bekanntmachung des Hinweises auf die Patenterteilung: **17.12.2008**
(21) Anmeldenummer: 07450019.0
(22) Anmeldetag: 08.02.2007
(51) Int. Cl.: B60T 7/10, G05G 1/00, G05G 1/06

(54) **Handbremseinrichtung**
Handbrake device
Dispositif de frein à main

(30) Priorität: 09.02.2006 AT 2002006
(43) Veröffentlichungstag der Anmeldung: 15.08.2007
(73) Patentinhaber: DGS Druckguss Systeme AG, 9015 St. Gallen (CH)
(72) Erfinder: Pichlbauer, Peter, 9403 Goldach (CH); Huber, Thomas, 9100 Herisau (CH)
(74) Vertreter: Babeluk, Michael

(56) Entgegenhaltungen:
- EP-A2- 1 273 495
- DE-A1- 10 127 505
- DE-U1- 20 017 904
- DE-U1- 20 023 720
- DE-U1-6202004 011 95
- US-A- 4 876 914
- US-A- 5 588 329

## Beschreibung

Die Erfindung betrifft eine Handbremseinrichtung mit einem Handbremshebel für ein Fahrzeug, mit einer einen Druckknopf aufweisenden Druckstange zum Entriegeln der Handbremse, wobei der Druckknopf durch eine Formschluss- und Rastverbindung mit der Druckstange verbunden ist, wobei vorzugsweise der Druckknopf quer zur Betätigungsrichtung der Druckstange auf diese aufsteckbar ist.

Der Druckknopf zum Lösen der Handbremse ist im Allgemeinen bei heutigen Fahrzeugen durch einen Kunststoffteil gebildet, welcher - in Betätigungsrichtung - auf eine Druckstange aufgeklemmt ist. Derartige Druckknöpfe haben allerdings den Nachteil, dass sie - insbesondere bei unsachgemäßer Betätigung - leicht beschädigt werden können, oder dass sie sich von der Druckstange unbeabsichtigt lösen und verloren gehen können.

Die US 4,876,914 A zeigt eine Handbremseinrichtung mit einem Handbremshebel für ein Fahrzeug, wobei eine einen Druckknopf aufweisende Druckstange zum Entriegeln der Handbremse vorgesehen ist. Der Druckknopf ist durch eine Formschlussverbindung mit der Druckstange verbunden, wobei der Druckknopf quer zur Betätigungsrichtung der Druckstange auf diese aufsteckbar ist. Der Druckknopf weist einen quer zur Betätigungsrichtung angeordneten Schlitz auf. Der Endbereich der Druckstange greift in einen Hohlraum des Druckknopfes ein, der entsprechend dem Endbereich der Druckstange geformt ist, um eine Formschlussverbindung zu bilden.

Die US 4,770,057 A zeigt eine Handbremseinrichtung mit einem Handbremshebel für ein Fahrzeug, mit einer einen Druckknopf aufweisenden Druckstange zum Entriegeln der Handbremse, wobei der Handbremshebel im Querschnitt ein U-förmiges Profil aufweist und über eine Rohrachse drehbar im Hebelhalter gelagert ist.

Aus der US 5,588,329 A ist ein Knauf für einen Ganghebel für ein Fahrzeug bekannt, welcher durch eine Formschluss- und Rastverbindung mit einer Druckstange verbunden ist. Die Rastverbindung weist zueinander gewandte Haken auf, welche einen Haltebereich der Druckstange zumindest teilweise umfassen. Der Knauf besteht aus Kunststoff.

Ferner ist aus der DE 103 36 799 A1 ein Fußhebel mit einer Kunststoffrohrachse bekannt.

Aufgabe der Erfindung ist es daher, eine robuste Handbremseinrichtung zu schaffen, deren Herstellung und Montage möglichst einfach ist.

Erfindungsgemäß wird dies dadurch erreicht, dass die Druckstange einen ersten und einen zweiten Teil aufweist, welche beidseits des Handbremshebels angeordnet und vorzugsweise über zumindest eine Klemm- und Klipsverbindung miteinander verbunden sind.

In einer einfachen und robusten Ausführungsvariante ist vorgesehen, dass die Rastverbindung zwei zueinander gewandte Haken aufweist, welche einen Haltebereich der Druckstange zumindest teilweise umfassen, wobei vorzugsweise die Haken einstückig mit dem Druckknopf oder mit der Druckstange ausgebildet sind.

Der Druckknopf und/oder die Druckstange bestehen vorteilhafter Weise aus Kunststoff, um Herstellungsaufwand und Gewicht möglichst klein zu halten. Der Handbremshebel ist bevorzugt als Leichtmetalldruckgussteil ausgebildet.

Um eine sichere Verbindung mit der Druckstange zu ermöglichen, ist vorgesehen, dass die Formschlussverbindung eine in den Druckknopf quer zur Betätigungsrichtung eingeformte Nut aufweist, in welche ein entsprechend der Nut geformter Endbereich der Druckstange, vorzugsweise des ersten Teiles der Druckstange, eingreift.

Um Gewicht einzusparen, kann die Druckstange mit einem Zugseil verbunden sein, welches auf einen Auslösemechanismus einer Sperre der Handbremse einwirkt. Um besonders kleine Umlenkradien zu ermöglichen, ist es vorteilhaft, wenn das Zugseil aus Kunststoff besteht.

In weiterer Ausführung ist vorgesehen, dass der Handbremshebel in einem Schnitt quer zur Betätigungsrichtung des Druckknopfes ein im Wesentliches H-oder U-förmiges Profil aufweist. Das H-förmige oder U-förmiges Profil des Handbremshebels ermöglicht eine hohe Steifigkeit bei äußerst geringem Gewicht.

In weiterer Ausführung der Erfindung kann vorgesehen sein, dass der Handbremshebel über eine Kunststoffrohrachse drehbar in einem Hebelhalter gelagert ist. Die Lagerung über eine Kunststoffrohrachse bringt Vorteile hinsichtlich der Gewichtseinsparung und des Herstellungsaufwandes.

Die Erfindung wird im Folgenden anhand der Figuren näher erläutert. Es zeigen:
- Fig. 1: eine erfindungsgemäße Handbremseinrichtung in einer Schrägansicht;
- Fig. 2: einen Handbremshebel in einer Schrägansicht;
- Fig. 3: den Handbremshebel in einem Schnitt gemäß der Linie III-III in Fig. 2;
- Fig. 4: den Handbremshebel in einem Schnitt gemäß der Linie IV-IV in Fig. 2;
- Fig. 5: eine Druckstange mit Druckknopf in einer ersten Ausführungsvariante in einer Schrägansicht;
- Fig. 6: einen Druckknopf in einer Schrägansicht in einer ersten Ausführungsvariante;
- Fig. 7: den Handbremshebel in einer Seitenansicht;
- Fig. 8: den Handbremshebel in einem Schnitt gemäß der Linie VIII-VIII in Fig. 7;
- Fig. 9: den Handbremshebel in einem Schnitt gemäß der Linie IX-IX in Fig. 8;
- Fig. 10: den Handbremshebel in einem Schnitt gemäß der Linie X-X in Fig. 9;
- Fig. 11: eine Druckstange in einer zweiten Ausführungsvariante in einer Seitenansicht;
- Fig. 12: diese Druckstange in einem Kreuzriss;
- Fig. 13: die Druckstange im Grundriss;
- Fig. 14: die Druckstange in einer Ansicht von hinten;
- Fig. 15: einen Druckknopf in einer zweiten Ausführungsvariante in einer Ansicht von der Seite der Druckstange;
- Fig. 16: den Druckknopf in einer Seitenansicht; und
- Fig. 17: den Druckknopf in einer Vorderansicht.

Funktionsgleiche Teile sind mit gleichen Bezugszeichen bezeichnet.

Die Handbremseinrichtung 1 weist einen Handbremshebel 2 auf, welcher beispielsweise als Leichtmetalldruckgussteil ausgebildet ist und über eine Kunststoffrohrachse 3 in einem Hebelhalter 4 drehbar gelagert ist. Der Handbremshebel 2 wirkt auf Handbremsseile 5 ein, welche mit den Fahrzeugbremsen verbunden sind. Zur Arretierung der Handbremseinrichtung 1 weist der Hebelhalter 4 ein Zahnsegment 6 auf, auf welches ein Sperrelement 7 in bekannter Weise einwirkt. Das Sperrelement 7 kann über ein Zugseil 8 aus Kunststoff gelöst werden, wodurch der Handbremshebel 2 in seine entriegelte Position bewegbar ist. Das Kunststoffseil 8 erlaubt - im Vergleich zu einem Stahlseil - relativ kleine Umlenkwinkel und eine kostengünstige Herstellung und Montage. Das Zugseil 8 ist dabei über Führungen 8a, 8b entlang dem Handbremshebel 10 und durch den Mittelsteg 10 hindurch geführt und an seinem Ende fest mit der Druckstange 9 verbunden. Durch Drücken des Druckknopfes 11 wird das Zugseil 8 beidseits des Mittelsteges in verschiedene Richtungen gezogen und die Druckbewegung somit in eine Zugbewegung verwandelt. Die Zugkraft des Zugseils 8 wird auf das Sperrelement 7 übertragen.

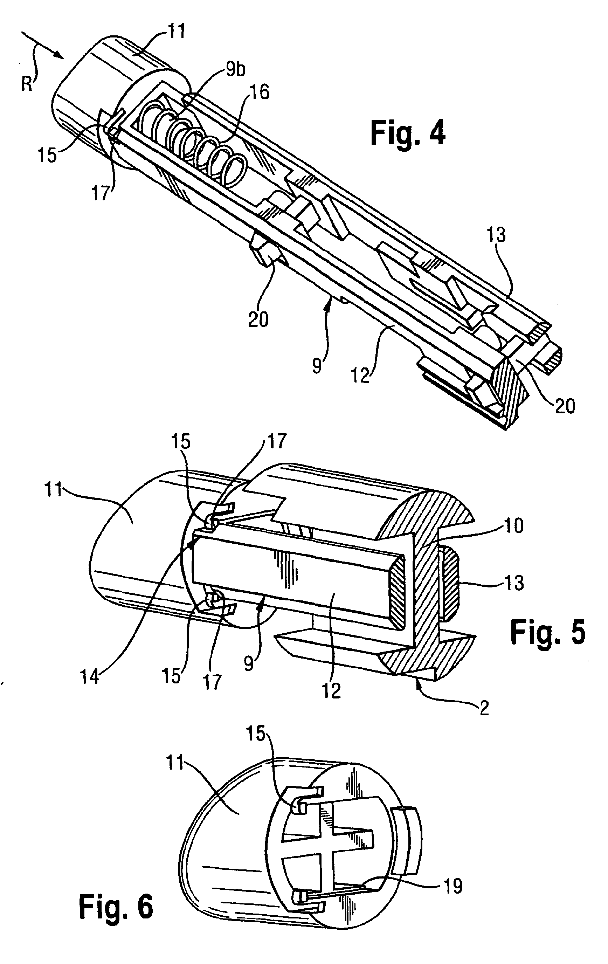

Die Druckstange 9 ist entlang des Handbremshebels 2 verschiebbar angeordnet. Wie insbesondere aus den Fig. 4 und Fig. 5 hervorgeht, besteht die Druckstange 9 aus einem ersten und einem zweiten Teil 12, 13, welche beidseits eines Mittelsteges 10 des Handbremshebels 2 angeordnet und über Klemm- und/oder Klipsverbindungen 20 miteinander verbunden sind. Der Handbremshebel 2 weist dabei bevorzugt ein im Wesentlichen H-förmiges oder U-förmiges Profil auf, wodurch bei geringem Gewicht eine hohe Steifigkeit erreicht werden kann.

Die Druckstange 9 ist mit einem Druckknopf 11 über eine Rastverbindung 14 und eine Formschlussverbindung 18 unverlierbar verbunden. Die Rasteinrichtung 15 weist dabei zwei einstückig mit dem Druckknopf 11 ausgebildete einander zugewandte Haken 15 auf, welche einen Haltebereich 17 der Druckstange 9 umfassen. Die Formschlussverbindung 18 besteht aus einer quer zur Betätigungsrichtung R in den Druckknopf 11 an dessen der Druckstange 9 zugewandten Seite eingeformte Nut 19, in welche ein entsprechend der Nut 19 geformter Endbereich 9a der Druckstange 9 eingreift. Der Druckknopf 11 kann somit seitlich - also quer zur Betätigungsrichtung R des Druckknopfes 11 und der Druckstange 9 - auf die Schubstange 9 aufgeschoben werden und mit dieser eine form- und/oder kraftschlüssige Verbindung eingehen.

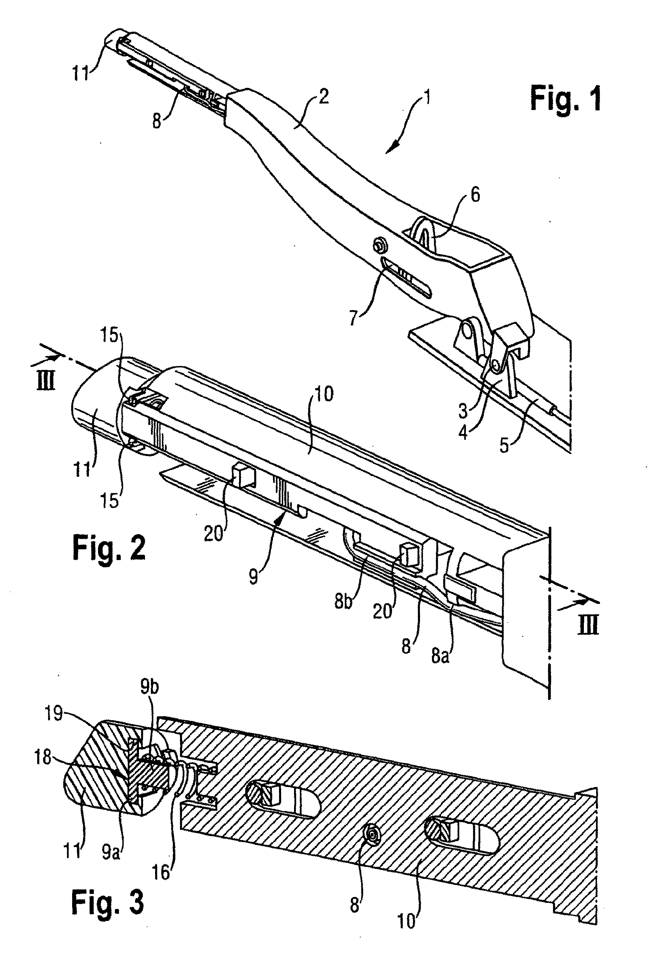

Die Druckstange 9 und der Druckknopf 11 sind entgegen der Betätigungsrichtung R über eine Druckfeder 16 am Bremshebel 10 abgestützt, wie aus den Fig. 3 und Fig. 4 hervorgeht. Der Endbereich 9a des ersten Teiles 12 der Druckstange 9 weist dabei eine zapfenförmige Federaufnahme 9b für die Druckfeder 16 auf.

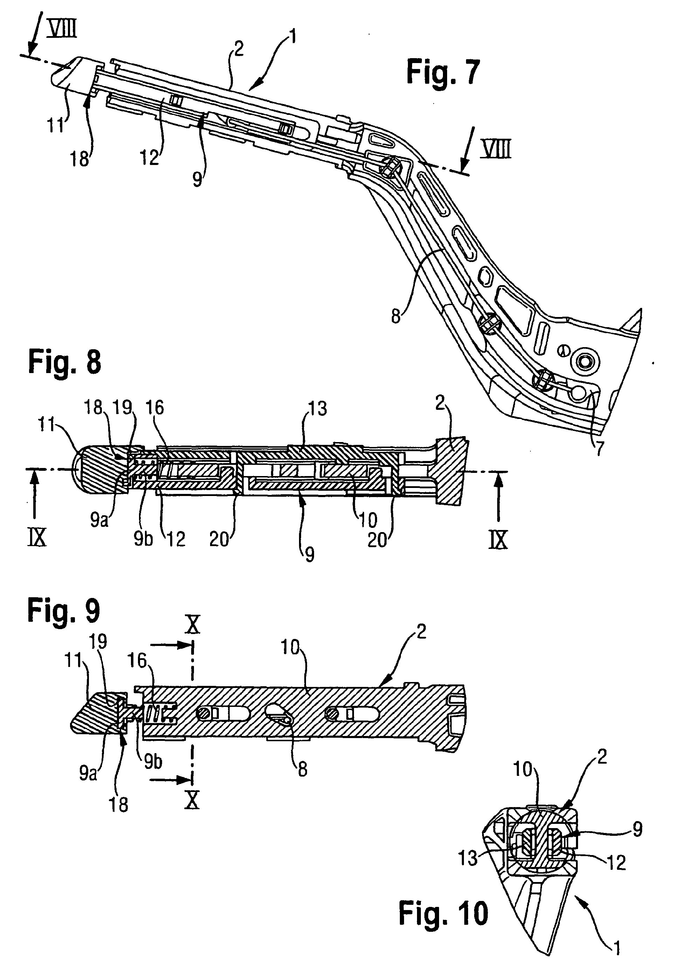

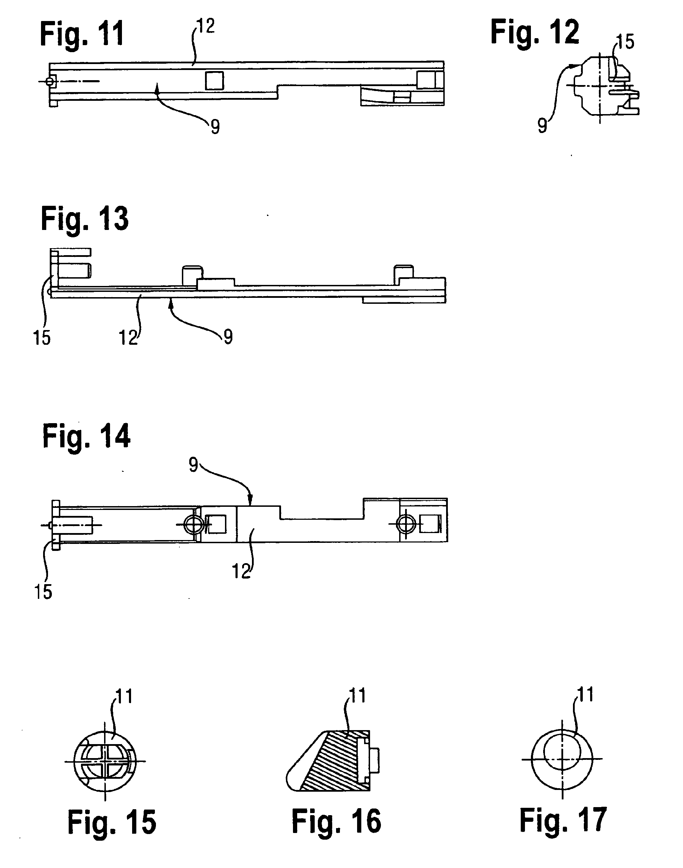

Die in den Fig. 11 bis Fig. 17 gezeigte Ausführungsvariante einer Druckstange 9 (Fig. 11 bis Fig. 14) und eines Druckknopfes 11 (Fig. 15 bis Fig. 17) unterscheidet sich von den Fig. 1 bis Fig. 10 dadurch, dass die Haken 15 nicht mit dem Druckknopf 11, sondern mit der Druckstange 9 einstückig ausgebildet sind.

## Patentansprüche

1. Handbremseinrichtung (1) mit einem Handbremshebel (2) für ein Fahrzeug, mit einer einen Druckknopf (11) aufweisenden Druckstange (9) zum Entriegeln der Handbremse, wobei der Druckknopf (11) durch eine Formschluss- und Rastverbindung (14, 18) mit der Druckstange (9) verbunden ist, wobei der Druckknopf (11) quer zur Betätigungsrichtung (R) der Druckstange (9) auf diese aufsteckbar ist, **dadurch gekennzeichnet, dass** die Druckstange (9) einen ersten und einen zweiten Teil (12, 13) aufweist, welche beidseits des Handbremshebels (2) angeordnet und über zumindest eine Klemm- und Klipsverbindung (20) miteinander verbunden sind.

2. Handbremseinrichtung (1) nach Anspruch 1, **dadurch gekennzeichnet, dass** die Rastverbindung (14) zwei zueinander gewandte Haken (15) aufweist, welche einen Haltebereich (17) der Druckstange (9) zumindest teilweise umfassen, wobei vorzugsweise die Haken (15) einstückig mit dem Druckknopf (11) oder mit der Druckstange (9) ausgebildet sind.

3. Handbremseinrichtung (1) nach Anspruch 1 oder 2, **dadurch gekennzeichnet, dass** die Formschlussverbindung (18) eine in den Druckknopf (11) quer zur Betätigungsrichtung (R) eingeformte Nut (19) aufweist, in welche ein entsprechend der Nut (19) geformter Endbereich (9a) der Druckstange (9), vorzugsweise des ersten Teiles (12) der Druckstange (9), eingreift.

4. Handbremseinrichtung (1) nach einem der Ansprüche 1 bis 3, **dadurch gekennzeichnet, dass** die Druckstange (9) mit einem Zugseil (8) verbunden ist, welches auf einen Auslösemechanismus eines Sperrelementes (7) der Handbremse einwirkt.

5. Handbremseinrichtung (1) nach Anspruch 4, **dadurch gekennzeichnet, dass** das Zugseil (8) aus Kunststoff besteht.

6. Handbremseinrichtung (1) nach einem der Ansprüche 1 bis 5, **dadurch gekennzeichnet, dass** der Druckknopf (11) und/oder die Druckstange (9) aus Kunststoff besteht.

7. Handbremseinrichtung (1) nach einem der Ansprüche 1 bis 6, **dadurch gekennzeichnet, dass** der Handbremshebel (2) als Kunststoff- oder Leichtmetallteil, vorzugsweise als Leichtmetalldruckgussteil ausgebildet ist.

8. Handbremseinrichtung (1) nach einem der Ansprüche 1 bis 7, **dadurch gekennzeichnet, dass** der Handbremshebel (2) in einem Schnitt quer zur Betätigungsrichtung (R) des Druckknopfes (11) ein im Wesentliches H-förmiges oder U-förmiges Profil aufweist.

9. Handbremseinrichtung (1) nach einem der Ansprüche 1 bis 8, **dadurch gekennzeichnet, dass** der Handbremshebel (2) über eine Kunststoffrohrachse (3) drehbar in einem Hebelhalter (4) gelagert ist.

## Claims

1. Handbrake assembly (1) with a hand brake lever (2) for an automotive vehicle, including a push rod (9) with a push button (11) for releasing the hand brake, where the push button (11) is mounted on the push rod (9) by means of a snap and lock connection (14, 18), and where the push button (11) can be attached to the push rod (9) transversally to the rod's actuating direction (R), **characterised in that** the push rod (9) has a first and a second part (12, 13), which are disposed on either side of the hand brake lever (2) and are mutually connected by means of at least one clamp and clip connection (20).

2. Handbrake assembly (1) according to claim 1, **characterised in that** the snap connection (14) has two hooks (15) facing each other, which embrace a holding section (17) of the push rod (9) at least partially, said hooks (15) preferentially being formed as integral parts of the push button (11) or the push rod (9).

3. Handbrake assembly (1) according to claim 1 or 2, **characterised in that** the lock connection (18) comprises a groove (19) formed in the push button (11) transversally to the actuating direction (R), into which groove enters the end (9a) of the push rod (9), i.e. preferentially of the first part (12) of the push rod (9), said end being shaped to fit into the groove (19).

4. Handbrake assembly (1) according to any of claims 1 to 3, **characterised in that** the push rod (9) is connected to a cable (8), which acts on the release mechanism of a locking element (7) of the hand brake.

5. Handbrake assembly (1) according to claim 4, **characterised in that** the cable (8) is made of plastic.

6. Handbrake assembly (1) according to any of claims 1 to 5, **characterised in that** the push button (11) and/or the push rod (9) is made of plastic.

7. Handbrake assembly (1) according to any of claims 1 to 6, **characterised in that** the hand brake lever (2) is made of plastic or light metal, preferentially as a die-cast light metal part.

8. Handbrake assembly (1) according to any of claims 1 to 7, **characterised in that** the hand brake lever (2) has an essentially H- or U-shaped profile as seen in a section transverse to the actuating direction (R) of the push button (11).

9. Handbrake assembly (1) according to any of claims 1 to 8, **characterised in that** the hand brake lever (2) is rotatably held in a lever bracket (4) by means of a tubular plastic axle (3).

## Revendications

1. Installation de frein à main (1) comportant un levier de frein à main (2) pour un véhicule, une tige de poussée (9) comportant un bouton poussoir (11) pour déverrouiller le frein à main, le bouton poussoir (11) étant relié à la tige de poussée (9) par une liaison par la forme et par accrochage (14, 18),
le bouton poussoir (11) étant engagé transversalement à la direction d'actionnement (R) de la tige de poussée (9),
**caractérisée en ce que**
la tige de poussée (9) comprend une première et une seconde partie (12, 13), ces deux parties étant situées de part et d'autre du levier de frein à main (2) et elles sont reliées l'une à l'autre par au moins une liaison par serrage et enclipsage (20).

2. Installation de frein à main (1) selon la revendication 1,
**caractérisée en ce que**
la liaison par accrochage (14) comporte deux crochets (15) tournés l'un vers l'autre, qui entourent au moins en partie une zone de fixation (17) de la tige de poussée (9) et, de préférence, les crochets (15) sont réalisés en une seule pièce avec le bouton poussoir (11) ou avec la tige de poussée (9).

3. Installation de frein à main (1) selon la revendication 1 ou 2,
**caractérisée en ce que**
la liaison par la forme (18) comporte une rainure (19) formée dans le bouton poussoir (11) transversalement à la direction d'actionnement (R), rainure dans laquelle pénètre une zone d'extrémité (9a) de forme correspondant à la rainure (19) et appartenant à la tige de poussée (9), de préférence à la première partie (12) de la tige de poussée (9).

4. Installation de frein à main (1) selon l'une des revendications 1 à 3,
**caractérisée en ce que**
la tige de poussée (9) est reliée à un câble de traction (8) agissant sur un mécanisme de déverrouillage d'un élément de verrouillage (7) du frein à main.

5. Installation de frein à main (1) selon la revendication 4,
**caractérisée en ce que**
le câble de traction (8) est en matière plastique.

6. Installation de frein à main (1) selon l'une des revendications 1 à 5,
**caractérisée en ce que**
le bouton poussoir (11) et/ou la tige de poussée (9) sont en matière plastique.

7. Installation de frein à main (1) selon l'une des revendications 1 à 6,
**caractérisée en ce que**
le levier de frein à main (2) est une pièce en matière plastique ou en métal léger, de préférence une pièce de fonte en métal léger.

8. Installation de frein à main (1) selon l'une des revendications 1 à 7,
**caractérisée en ce que**
le levier de frein à main (2) présente en coupe transversale par rapport à la direction d'actionnement (R) du bouton poussoir (11), un profil de forme pratiquement en H ou en U.

9. Installation de frein à main (1) selon l'une des revendications 1 à 8,
**caractérisée en ce que**
le levier de frein à main (2) est monté à rotation dans un support de levier (4) par l'intermédiaire d'un axe formé par un tube en matière plastique (3).
